# EUROPEAN PATENT SPECIFICATION

(11) **EP 3 124 209 B1**
(45) Date of publication and mention of the grant of the patent: **26.12.2018**
(21) Application number: 16181067.6
(22) Date of filing: 25.07.2016
(51) Int. Cl.: B29C 65/52, A41H 43/04, D06H 5/00

(54) **BONDING DEVICE**
BONDINGVORRICHTUNG
DISPOSITIF DE LIAISON

(30) Priority: 29.07.2015 JP 2015149289
(43) Date of publication of application: 01.02.2017
(73) Proprietor: Brother Kogyo Kabushiki Kaisha, Nagoya-shi, Aichi 467-8561 (JP)
(72) Inventor: IWAKOSHI, Hiroyasu, Nagoya-shi Aichi 467-8562 (JP)
(74) Representative: J A Kemp

(56) References cited:
- EP-A1- 2 216 163
- EP-A1- 2 233 279
- EP-A1- 3 075 276
- EP-A1- 3 075 519
- EP-A1- 3 075 520
- EP-A1- 3 075 521
- EP-A2- 2 468 123
- JP-A- 2013 129 533
- JP-A- 2014 129 184
- US-A1- 2003 010 439

## Description

### BACKGROUND

The present invention relates to a bonding device.

A bonding device is known that discharges a heated and liquefied adhesive from a nozzle and bonds a cloth to a cloth. It is necessary for the bonding device to apply the adhesive to the cloth in a stable manner. Thus, the bonding device needs to maintain a distance between the cloth and the nozzle to be constant. In a bonding device disclosed in Japanese Laid-Open Patent Publication No. 2010-179211, a nozzle is disposed between an upper cloth and a lower cloth. The bonding device discharges adhesive from the nozzle onto the lower cloth, clamps the upper cloth and the lower cloth to which the adhesive has been applied between an upper roller and a lower roller, and thus pressure bonds the cloths. At that time, the bonding device urges the upper roller toward the lower roller side and can thus apply pressure. The bonding device is provided with an urging roller below the nozzle. The urging roller urges the lower cloth upward. Thus, even when bonding cloths having a different thickness, the lower cloth comes into contact with the nozzle. The bonding device can maintain a constant distance between the lower cloth and the nozzle, and can apply the adhesive to the cloth in a stable manner. EP 2468123 discloses a case where an operator stops operation of a pedal, a CPU drives an air cylinder and moves a second pulley from a first position to a second position. When the second pulley moves to the first position, a movable portion of the air cylinder moves downward. A front portion of a belt moves upward. In the first position, the belt and a nozzle clamp a lower cloth. When the second pulley moves to the second position, the movable portion of the air cylinder moves upward. The front portion of the belt moves downward. In the second position, the second pulley is separated further from the nozzle than in the first position. Thus, a gap between the lower cloth and the nozzle becomes wider.

### SUMMARY

Bonding by the bonding device includes a bonding process in which a long tape-shaped upper sheet is bonded to a lower sheet, which is the lower cloth, by being placed against the lower sheet from above. In the bonding process, in order to inhibit the adhesive from oozing from the edges in the width direction of the tape-shaped upper sheet, it is preferable for the bonding device to discharge the adhesive from the nozzle onto the upper sheet, and to bond the upper sheet to which the adhesive has been applied to the lower sheet.

However, in the known bonding device, if the lower sheet is replaced with a lower sheet have a different thickness, the position of the upper roller in the up-down direction is displaced. When the above-described bonding process is performed, if the position of the upper roller in the up-down direction is displaced, the position of the upper sheet in the up-down direction is displaced, and a distance between the upper sheet and the nozzle may change. In this case, it is not possible to apply the adhesive to the upper sheet in a stable manner, and there is a possibility that this will result in a bonding defect.

It is an object of the present invention to provide a bonding device capable of suppressing changes in a distance between an upper sheet and a nozzle.

A bonding device of the present invention includes a nozzle that is adapted to discharge adhesive, bonds a bonding surface of a first sheet to a second sheet via the adhesive discharged from the nozzle, and feeds the first sheet and the second sheet. The bonding device also includes a base portion, an upper roller, a lower roller, a lower roller support portion, a lower roller base, and an adjustment mechanism. The base portion is a base of the bonding device and has a fixing face parallel to the up-down direction. The upper roller is adapted to come into contact with a face on the opposite side to the bonding face of the first sheet and is adapted to feed the first sheet overlaid on a top face of a second sheet. The lower roller is disposed facing the upper roller. The lower roller is adapted to come into contact with a bottom face of the second sheet, and is adapted to clamp the first sheet and the second sheet between the lower roller and the upper roller. The lower roller support portion rotatably supports the lower roller. The lower roller base holds the lower roller support portion. The adjustment mechanism is adapted to adjust an attachment position, in the up-down direction, of the lower roller base with respect to the fixing face of the base portion. The adjustment mechanism includes a first shaft portion and a rotating member. The first shaft portion extends in a perpendicular direction with respect to the fixing face, from one of the fixing face and the lower roller base. The rotating member is provided on the other one of the fixing face and the lower roller base, has a first hole portion into which is inserted the first shaft portion, extends in parallel to the perpendicular direction, and is capable of rotating around a rotation axis that is eccentric with respect to the first shaft portion. The bonding device bonds the bonding face of the first sheet to the second sheet via the adhesive discharged from the nozzle and feeds the first sheet and the second sheet.

Since the rotation axis of the rotating member is eccentric with respect to the first shaft portion, due to the rotation of the rotating member, the rotating member moves up and down with respect to the first shaft portion, on the inside of the first hole portion. As a result, the adjustment mechanism can convert a force obtained by the rotation of the rotating member to a force that moves the lower roller base up and down with respect to the first shaft portion. When the rotating member moves up and down with respect to the first shaft portion, the attachment position of the lower roller base in the up-down direction with respect to the fixing face is displaced. In this case, the position of the lower roller with respect to the upper roller in the up-down direction is also displaced. A user can adjust the distance between the upper roller and the lower roller without displacing the position of the upper roller by rotating the rotating member. As a result, it is possible to suppress changes in a distance between the first sheet and the nozzle when the bonding device applies the adhesive to the first sheet.

In the bonding device of the present invention, the adjustment mechanism may include a retention hole portion that penetrates the lower roller base in parallel to the perpendicular direction and into which the rotating member is inserted. The retention hole portion may hold the rotating member such that the rotating member is able to rotate around the rotation axis, and the first shaft portion may extend in the perpendicular direction from the fixing face. In this case, the retention hole portion that penetrates the lower roller base rotatably holds the rotating member. As a result, there is no need to provide a new member in the bonding device, as a member to hold the rotating member. The number of parts of the bonding device can be reduced and the bonding device can be made more compact.

In the bonding device of the present invention, the adjustment mechanism may include: a second shaft portion that is provided, on the fixing face, further to a downstream side in a feed direction of the first sheet and the second sheet than the first shaft portion, and that extends in parallel to the perpendicular direction; and a second hole portion that is provided in the lower roller base and into which the second shaft portion is inserted. The lower roller base may be able to swing around the second shaft portion inserted into the second hole portion. In this case, when the rotating member rotates, the lower roller base swings around the second shaft portion. As a result, the user can adjust the position of the lower roller in the up-down direction simply by rotating the rotating member. The bonding device can easily adjust the position of the lower roller in the up-down direction.

In the bonding device of the present invention, a distance between the first shaft portion and a center of rotation of the lower roller may be smaller than a distance between the second shaft portion and the center of rotation of the lower roller. In this case, the distance between the first shaft portion, which is inserted into the first hole portion, and the center of rotation of the lower roller is smaller than the distance between the second shaft portion, which is a center of oscillation of the lower roller base, and the center of rotation of the lower roller. A movement amount of the lower roller in the up-down direction when the lower roller base swings around the second shaft portion is proportional to the distance between the second shaft portion and the lower roller. Therefore, in comparison to a case in which the distance between the first shaft portion and the lower roller is larger than the distance between the second shaft portion and the lower roller, the bonding device can significantly move the lower roller up and down even when a rotation amount of the rotating member is small. The bonding device can increase an adjustment range of the position of the lower roller in the up-down direction.

In the bonding device of the present invention, a first virtual line that passes through an axial center of the first shaft portion and an axial center of the second shaft portion may be parallel to a horizontal plane. In this case, the bonding device can make movement amounts of the lower roller substantially equal to each other when the rotating member is rotated by the same amount in one direction and the other direction, respectively.

In the bonding device of the present invention, the first hole portion may be an elliptical hole portion that extends in parallel to a second virtual line which passes through the rotation axis and the axial center of the first shaft portion, and a rotation range of the rotating member may include a reference state in which the second virtual line is parallel to the horizontal plane. In this case, the bonding device can make movement amounts of the lower roller base substantially equal to each other when the rotating member in the reference state is rotated by the same amount in one direction and the other direction, respectively.

In the bonding device of the present invention, the adjustment mechanism may include a fixing portion that fixes the rotating member to the lower roller base. In this case, after the position of the lower roller has been adjusted in the up-down direction using the rotating member, in the bonding device, the rotating member can be fixed to the lower roller base using the fixing portion. Therefore, the bonding device can inhibit the position of the lower roller in the up-down direction from becoming displaced after the adjustment.

### BRIEF DESCRIPTION OF THE DRAWINGS

Exemplary embodiments of the present invention will be described below in detail with reference to the accompanying drawings in which:
FIG. 1 is an oblique view of a bonding device 1 placed on a top face of a work bench 200;
FIG. 2 is an oblique view showing an internal configuration of the bonding device 1;
FIG. 3 is a left side view of the bonding device 1 when a nozzle 10 has moved to a proximate position;
FIG. 4 is a left side view of the bonding device 1 when the nozzle 10 has moved to a retracted position;
FIG. 5 is an enlarged view of a region W1 shown in FIG. 3;
FIG. 6 is an exploded oblique view of a lower roller base 35 and an adjustment mechanism 700;
FIG. 7 is an oblique view of a rotating member 73;
FIG. 8 is a left side view of the bonding device 1 when the rotating member 73 is in a reference state;
FIG. 9 is a left side view of the bonding device 1 when the rotating member 73 has rotated in the clockwise direction from the reference state; and
FIG. 10 is a left side view of the bonding device 1 when the rotating member 73 has rotated in the counterclockwise direction from the reference state.

### DETAILED DESCRIPTION OF EXEMPLARY EMBODIMENTS

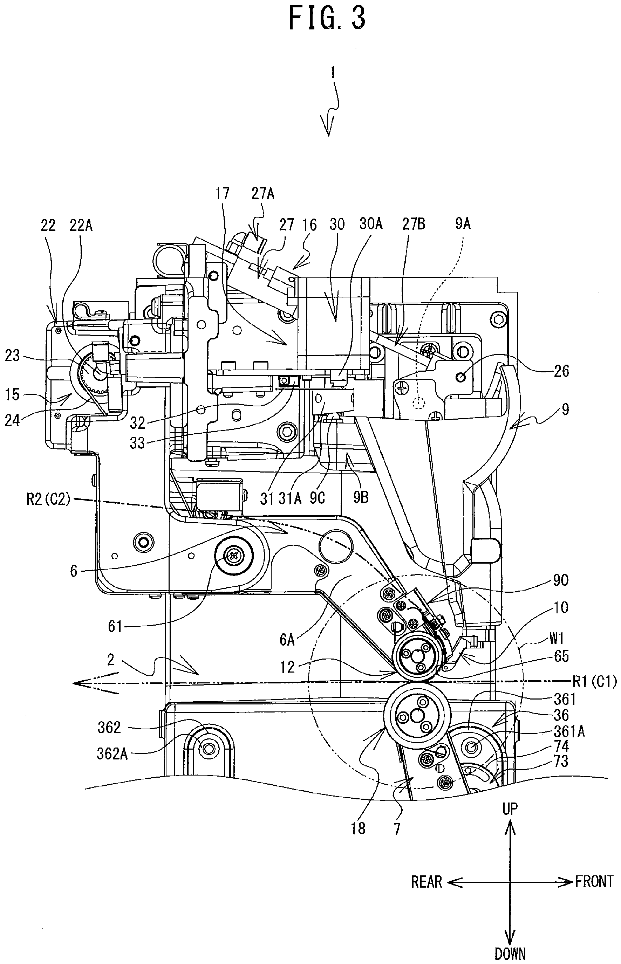

An embodiment of the present invention will be explained. In the following explanation, up and down directions, left and right directions, and front and rear directions as indicated by arrows in the drawings are used. A bonding device 1 bonds two sheets using an adhesive. As shown in FIG. 3, the bonding device 1 can perform a tape bonding process, for example, in which a long tape C2 that is made of fabric is adhered, using adhesive, to a flat cloth C1. In the present embodiment, the bonding device 1 is explained when it is performing the tape bonding process.

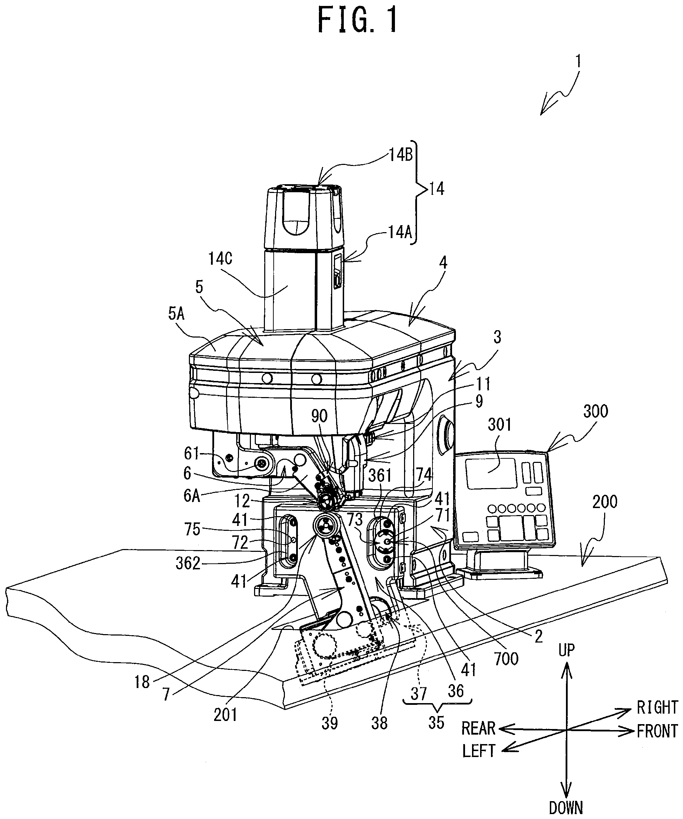

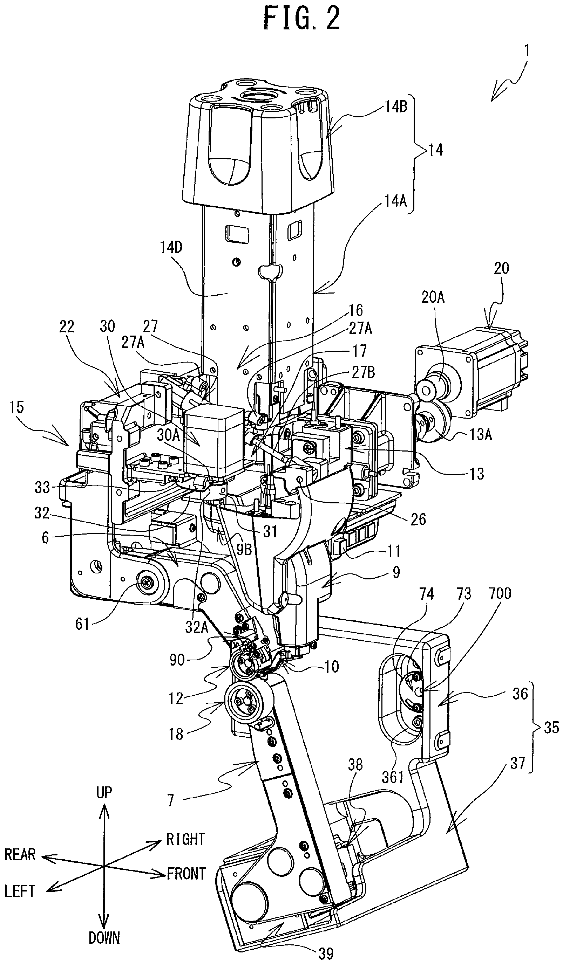

In FIG. 1, portions concealed by a work bench 200 are indicated using virtual lines. As shown in FIG. 1 and FIG. 2, the bonding device 1 is placed on a top face of the work bench 200 that is substantially parallel to the horizontal plane. The bonding device 1 is provided with a base portion 2, a pillar 3, an arm 4, a head 5, an upper feed arm 6, a lower feed arm 7, an adjustment mechanism 700, a lever 9, a nozzle 10, an operation panel 300, and a control unit etc.

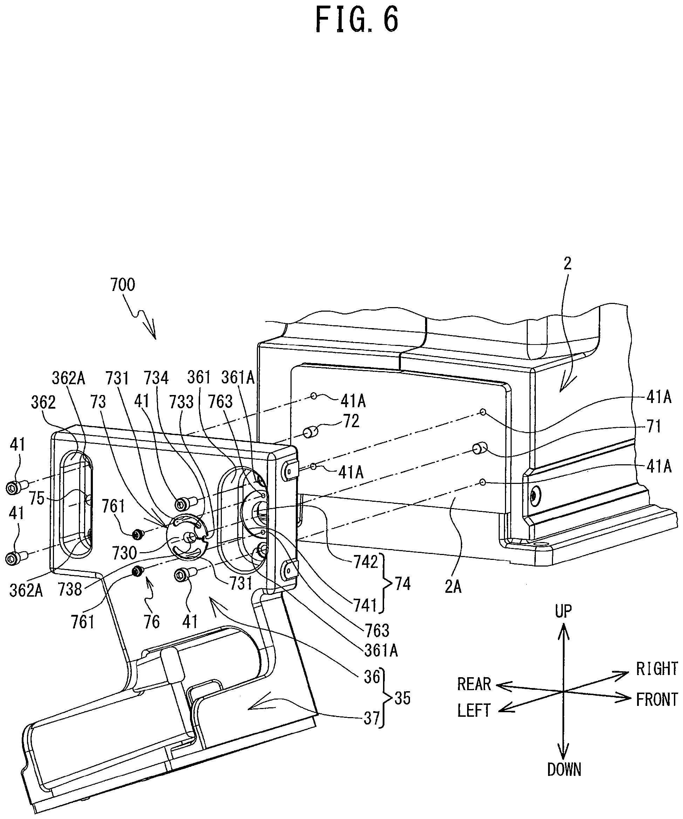

The base portion 2 is a substantially cuboid shape and is fixed to the top face of the work bench 200 using screws. The base portion 2 is a base for the bonding device 1. An attachment face 2A (refer to FIG. 6) is provided on a left side face of the base portion 2. The attachment face 2A is parallel to the vertical direction. The attachment face 2A has four screw holes 41A (refer to FIG. 6), provided in the vicinity of each of the four corners of the attachment face 2A. The pillar 3 is substantially a rectangular column that extends vertically upward from a top face of the base portion 2. The arm 4 extends to the left from the upper end of the pillar 3. A command switch 11 is provided on a front face of a lower portion of the arm 4. The command switch 11 accepts a command to swing the lever 9, for example, and move the nozzle 10 to a proximate position or to a retracted position. The head 5 is a portion that extends farther to the left from the left end of the arm 4.

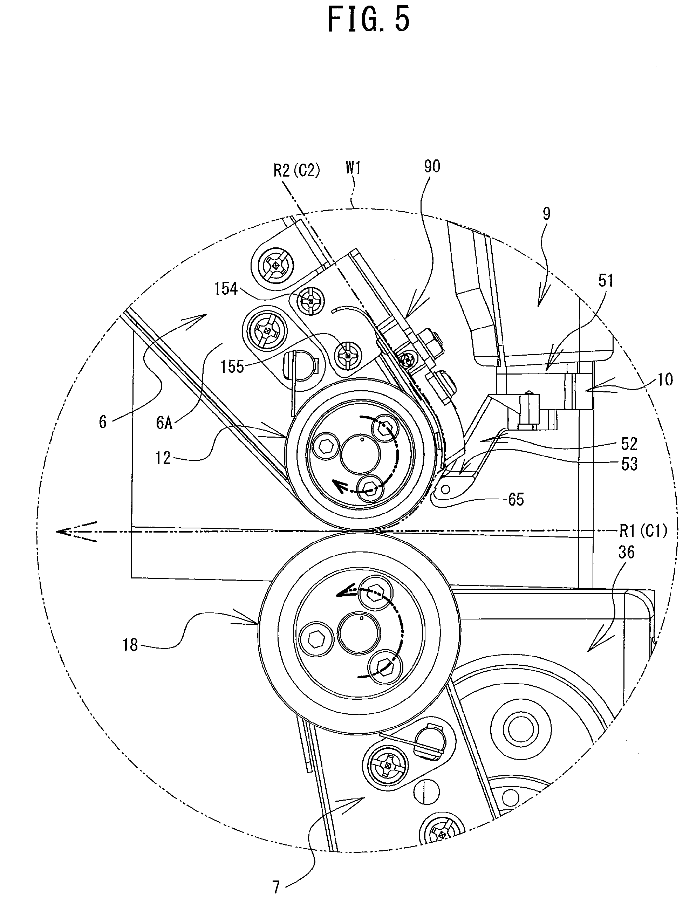

The upper feed arm 6 extends substantially horizontally to the front from the rear end side of a bottom face of the head 5, and the leading end side of the upper feed arm 6 bends diagonally forward and downward. A shaft portion 61, which extends in the left-right direction, is provided substantially in a central portion of the upper feed arm 6 in the front-rear direction. The leading end side of the upper feed arm 6 is driven by an air cylinder provided inside the head 5 and swings in the up-down direction, using the shaft portion 61 as an axis. The leading end of the upper feed arm 6 rotatably supports an upper roller 12. The upper roller 12 is driven by an upper roller drive mechanism 15 and rotates clockwise as seen from the left side (refer to FIG. 5). The upper roller drive mechanism 15 is provided inside the head 5. Using screws 154 and 155 (refer to FIG. 5), a tape guide 90 is fixed to the upper feed arm 6, in the vicinity of the front end of a left side face 6A. The tape guide 90 guides the tape C2, which is supplied from the rear of the bonding device 1, along an outer circumferential face of the upper roller 12.

The lower feed arm 7 is detachably attached to the attachment face 2A of the base portion 2, via a lower roller base 35. The lower feed arm 7 extends diagonally upward and toward the rear from a lower portion of the lower feed arm 7 that is positioned lower than the base portion 2. The leading end of the lower feed arm 7 rotatably supports a lower roller 18. The lower roller 18 faces the upper roller 12. The lower portion of the lower feed arm 7 and a lower portion of the lower roller base 35 are disposed inside an opening 201 in the top face of the work bench 200 by being lowered into the opening 201 from above, and are positioned lower than a bottom portion of the base portion 2.

The lower roller base 35 is provided with an attachment portion 36 and a support portion 37. The attachment portion 36 is a substantially rectangular plate shape. The attachment portion 36 is provided with a front recessed portion 361 and a rear recessed portion 362 that are recessed to the right. The front recessed portion 361 and the rear recessed portion 362 are respectively provided in the vicinity of the front end and the rear end of the attachment portion 36, and in a left side view, each of the front recessed portion 361 and the rear recessed portion 362 has an elliptical shape whose major axis is in the up-down direction. The front recessed portion 361 and the rear recessed portion 362 are provided with a pair of front hole portions 361A and a pair of rear hole portions 362A, respectively. The pair of front hole portions 361A respectively penetrate, in the left-right direction, an upper portion and a lower portion of the front recessed portion 361. The pair of rear hole portions 362A respectively penetrate, in the left-right direction, an upper portion and a lower portion of the rear recessed portion 362. Four screws 41 are inserted through the pair of front hole portions 361A and the pair of rear hole portions 362A. The four screws 41 are respectively inserted into the pair of front hole portions 361A and the pair of rear hole portions 362A from the left, and are screwed into the four screw holes 41A (refer to FIG. 6), thus fixing the attachment portion 36 to the attachment face 2A. The diameter of a shaft portion of each of the four screws 41 is slightly smaller than the diameter of each of the pair of front hole portions 361A and the pair of rear hole portions 362A. Thus, when the four screws 41 are loosened, the attachment portion 36 can be slightly moved within a range between the screws 41 and each of the pair of front hole portions 361A and the pair of rear hole portions 362A.

The support portion 37 is coupled to the lower end of the attachment portion 36 and extends to the left. The support portion 37 is a substantial box shape that is open upward and to the left. A bottom face of the support portion 37 is inclined downward from the front end toward the rear end. A bracket 39 is fixed to the interior of the support portion 37. The bracket 39 has a substantially rectangular plate face as seen from the left side. A lower feed motor 38 is fixed to the right side of the plate face of the bracket 39. The lower end of the lower feed arm 7 is fixed to the left side of the plate face of the bracket 39. Specifically, the support portion 37 supports the lower feed arm 7 via the bracket 39. A drive shaft of the lower feed motor 38 protrudes to the left through a hole provided in the bracket 39, and is connected to a lower roller drive mechanism. The lower roller drive mechanism is provided inside the lower feed arm 7. The lower roller drive mechanism includes a plurality of pulleys and a timing belt etc., and transmits the power of the lower feed motor 38 to the lower roller 18. Thus, the lower roller 18 rotates counterclockwise (refer to FIG. 5), as seen from the left side. Attachment positions of the lower feed motor 38 and the bracket 39 with respect to the support portion 37 in the left-right direction can be adjusted. As a result, the bonding device 1 can adjust the position of the lower roller 18 in the left-right direction, in accordance with a position of the application of the adhesive and so on. The adjustment mechanism 700 is a mechanism to adjust the position (hereinafter referred to as an attachment position) in the up-down direction of the lower roller base 35 with respect to the attachment face 2A.

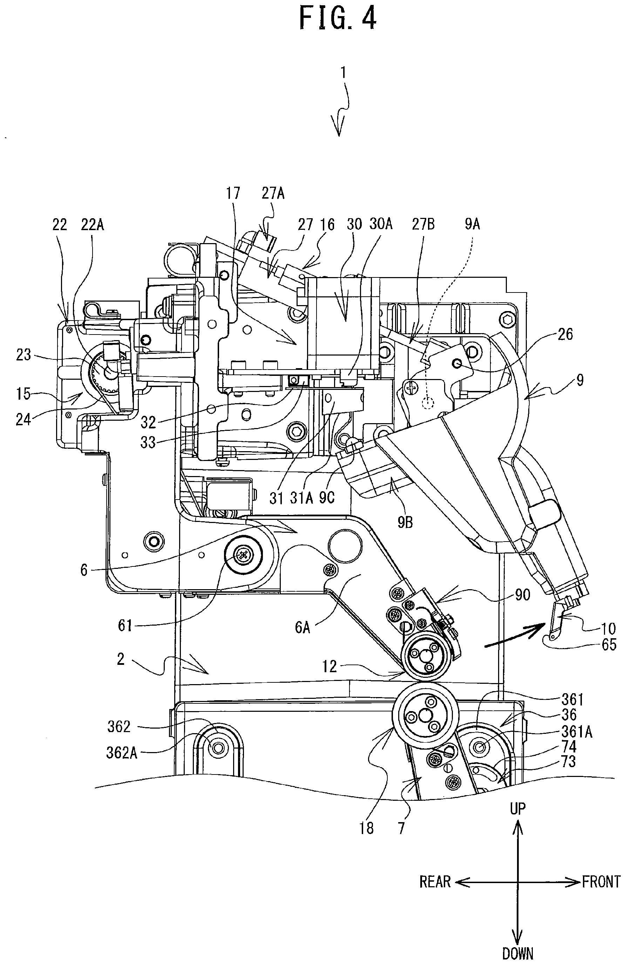

The lever 9 is arm-shaped, and extends downward from the front end side of the bottom face of the head 5. A pivotal shaft 9A (refer to FIG. 3) rotatably supports the upper end of the lever 9. The pivotal shaft 9A extends in the left-right direction. The left end of the pivotal shaft 9A supports the upper end of the lever 9, and the right end of the pivotal shaft 9A is connected to a gear pump 13 (refer to FIG. 2). The lower end of the lever 9 can swing in the front-rear direction around the pivotal shaft 9A. As shown in FIG. 3 and FIG. 4, a protrusion 9B is provided on an upper portion of a rear face side of the lever 9. The protrusion 9B is a substantially rectangular column that protrudes to the rear. A top face of the protrusion 9B is provided with a hemispherical contacted face 9C. The contacted face 9C comes into contact, from below, with a cam face 31A of a cam rotation body 31. An adhesive supply channel is provided inside the lever 9. The upper end of the supply channel is connected to an adhesive flow channel provided inside the pivotal shaft 9A. The adhesive that is supplied to the supply channel by the gear pump 13 (refer to FIG. 2) via the flow channel is supplied to the nozzle 10. The lever 9 is provided with a bar-shaped heater in the vicinity of the supply channel. The heater heats the adhesive flowing through the supply channel of the lever 9.

As shown in FIG. 5, the nozzle 10 is detachably mounted on the lower end of the lever 9. The nozzle 10 is a metal component provided with a discharge portion 53, a support portion 52, and a rotating coupling portion 51. The discharge portion 53 is substantially bar shaped, extends substantially horizontally in the left-right direction, and is provided with a plurality of discharge outlets 65. The plurality of discharge outlets 65 face the outer circumferential face of the upper roller 12. The discharge outlets 65 are openings that discharge the adhesive. The support portion 52 is a substantially columnar shape, and extends to the front and diagonally upward from the right end of the discharge portion 53. The rotating coupling portion 51 extends from the upper end of the support portion 52 while bending to the right, and is rotatably coupled to the lower end of the lever 9.

The operation panel 300 is disposed on the top face of the work bench 200. The operation panel 300 is provided with a display screen 301. The display screen 301 displays various pieces of information. The various pieces of information include, for example, a distance between the discharge outlets 65 and the outer circumferential face of the upper roller 12 (hereinafter referred to as a nozzle clearance). The operation panel 300 has a plurality of keys. An operator inputs various pieces of information by depressing the keys.

The control unit is placed on the bottom face of the work bench 200, and controls the operation of the bonding device 1. The control unit sets parameters of the nozzle clearance etc. and controls the operation of the bonding device 1 in accordance with operations received by the command switch 11 (refer to FIG. 2) and the operation panel 300. In the present embodiment, the bonding device 1 guides the tape C2 (refer to FIG. 3) along the outer circumferential face of an upper portion of the upper roller 12, and it is thus possible to set the distance between the discharge outlets 65 and the tape C2 by setting the nozzle clearance.

A feed path R1 is a feed path of the cloth C1 in the tape bonding process. A feed path R2 is a feed path of the tape C2 in the tape bonding process. The upper roller 12 and the lower roller 18 face each other in the up-down direction from either side of the feed paths R1 and R2 and can come into contact with each other. A contact point at which the upper roller 12 and the lower roller 18 come into contact with each other is a pressure bonding point at which the upper roller 12 and the lower roller 18 clamp the adhesive between the cloth C1 and the tape C2 and pressure bond the cloth C1 and the tape C2 together. At the pressure bonding point, the upper roller 12 comes into contact with the top face of the tape C2 and the lower roller 18 comes into contact with the bottom face of the cloth C1. The feed path R1 extends from the front of the bonding device 1 toward the rear, passing through the pressure bonding point. The feed path R2 passes from a tape supply source along the outer circumferential face of the upper roller 12, after passing the upper portion of the upper roller 12, and extends to the rear, passing through the pressure bonding point. The tape supply source is installed to the rear of the bonding device 1.

The axial directions of the rotational axes of the upper roller 12 and the lower roller 18 are parallel to the left-right direction of the bonding device 1. The outside diameter of the lower roller 18 is greater than the outside diameter of the upper roller 12. The discharge outlets 65 of the nozzle 10 face the outer circumferential face of the upper roller 12 and are separated from the outer circumferential face by a specified clearance, at a position further to an upstream side of the feed path R2 than the pressure bonding point (refer to FIG. 5). The discharge outlets 65 discharge the adhesive toward a bonding face of the tape C2 on the opposite side from the upper roller 12. Thus, by rotationally driving the upper roller 12 and the lower roller 18, the bonding device 1 is able to adhere the bonding face of the tape C2, to which the adhesive has been applied, onto the top face of the cloth C1 disposed below the tape C2, then feed the cloth C1 and the tape C2 toward the rear while pressure bonding them together at the pressure bonding point.

As shown in FIG. 2, the gear pump 13, a cartridge mounting portion 14, the upper roller drive mechanism 15, a lever swinging mechanism 16, a nozzle clearance adjustment mechanism 17, and the like are provided on the inner side of a cover 5A of the head 5. The gear pump 13 is provided to the front right of the head 5, and an adhesive supply channel is provided inside the gear pump 13. A pump motor 20 is provided inside the arm 4 (refer to FIG. 1). A gear 20A is fixed to a rotating shaft of the pump motor 20, and meshes with a gear 13A of the gear pump 13. When the pump motor 20 operates, the gear 13A operates. When the gear 13A operates, the gear pump 13 draws an appropriate amount of the adhesive out of a cartridge that is mounted in the cartridge mounting portion 14, and supplies the adhesive to the supply channel inside the lever 9, via the flow channel inside the pivotal shaft 9A. The cartridge mounting portion 14 is provided to the rear of the gear pump 13, and includes a main body 14A and a lid 14B. The main body 14A includes a cover 14C (refer to FIG. 1) and a storage portion 14D. The cover 14C covers a periphery of the storage portion 14D. The storage portion 14D is provided standing vertically, and is a bottomed rectangular cylinder whose top portion is open. The cartridge is detachably mounted in the storage portion 14D. The cartridge houses a hot melt adhesive. When the cartridge is mounted in the storage portion 14D, the adhesive can be supplied to the gear pump 13. The hot melt adhesive liquefies when it is heated to a predetermined temperature, and hardens at a temperature lower than the predetermined temperature. The storage portion 14D is provided with a pair of heaters on both sides of the cartridge. The pair of heaters heat up the cartridge. As a result, the adhesive melts and becomes liquefied. The lid 14B is detachably attached to an upper portion of the storage portion 14D, and opens and closes the upper portion opening of the storage portion 14D. When the lid 14B is screwed on by a rotation operation, the lid 14B can be fixed to the upper portion of the storage portion 14D, and can be removed by being loosened.

As shown in FIG. 3 and FIG. 4, the upper roller drive mechanism 15 is provided on the left end side of the head 5. The upper roller drive mechanism 15 includes an upper feed motor 22, a drive pulley 23, a first driven pulley, a first timing belt 24, a second driven pulley, a second timing belt and the like. The first driven pulley, the second driven pulley and the second timing belt are provided inside the upper feed arm 6. The upper feed motor 22 is fixed, on a rear face side of the head 5, to the upper portion of the head 5 on the left end side. A drive shaft 22A of the upper feed motor 22 extends to the left. The drive pulley 23 is fixed to the drive shaft 22A. The first timing belt 24 is stretched between the drive pulley 23 and the first driven pulley. The second driven pulley is fixed to a rotating shaft of the upper roller 12. The second timing belt is stretched between the first driven pulley and the second driven pulley. Thus, the power of the upper feed motor 22 is transmitted to the upper roller 12, via the drive pulley 23, the first driven pulley, the first timing belt 24, the second driven pulley, and the second timing belt. As a result, the upper roller 12 rotates clockwise as seen from the left side.

The lever swinging mechanism 16 is provided on the left end side of the head 5. The lever swinging mechanism 16 includes an air cylinder 27 and a coupling shaft 26. The air cylinder 27 is adjacent to the left side of the storage portion 14D of the cartridge mounting portion 14. The air cylinder 27 includes two air inlets 27A, to the front and the rear. Intake-exhaust hoses are connected to the two air inlets 27A. The bonding device 1 controls the intake and exhaust of compressed air from the intake-exhaust hoses to the two air inlets 27A. A position of a piston inside the air cylinder 27 moves according to the control of the air intake and exhaust. A rod-shaped movable portion 27B extends in the front-rear direction, and is connected to the piston. When the piston moves, the movable portion 27B moves in the front-rear direction. The coupling shaft 26 is provided on the leading end of the movable portion 27B. The coupling shaft 26 is rotatably coupled to the lever 9, at a position separated upward and to the front from the pivotal shaft 9A of the lever 9.

As shown in FIG. 3, when the movable portion 27B of the air cylinder 27 moves downward and to the front, the movable portion 27B moves the coupling shaft 26 forward. Thus, the lever 9 swings clockwise, as seen from the left side, around the pivotal shaft 9A, and the nozzle 10 moves to the proximate position. As shown in FIG. 4, when the movable portion 27B of the air cylinder 27 moves upward and to the rear, the movable portion 27B moves the coupling shaft 26 rearward. Thus, the lever 9 swings counterclockwise, as seen from the left side, around the pivotal shaft 9A, and the nozzle 10 moves to the retracted position. The proximate position is a position where the discharge outlets 65 of the nozzle 10 come close to the outer circumferential face of the upper roller 12 from the front. During the bonding operation, the bonding device 1 moves the nozzle 10 to the proximate position. The retracted position is a position where the discharge outlets 65 are significantly distant from the outer circumferential face of the upper roller 12 toward the front. For example, when the tape C2 is disposed along the outer circumferential face of the upper roller 12, the bonding device 1 moves the nozzle 10 to the retracted position.

The nozzle clearance adjustment mechanism 17 is provided to the left of the air cylinder 27. The nozzle clearance adjustment mechanism 17 includes an adjustment motor 30, the cam rotation body 31, an origin point sensor 33, a detection plate 32 and the like. A drive shaft 30A of the adjustment motor 30 extends downward. The cam rotation body 31 is a substantially circular cylindrical body that extends in the up-down direction. The top face of the cam rotation body 31 is coupled to the lower end of the drive shaft 30A. The cam rotation body 31 is provided with the cam face 31A on its bottom face. The cam face 31A is an inclined face. When the lever 9 swings around the pivotal shaft 9A and the nozzle 10 moves to the proximate position, the hemispherical contacted face 9C provided on the top face of the protrusion 9B of the lever 9 comes into contact with the cam face 31A from below. When the adjustment motor 30 operates, the cam rotation body 31 rotates together with the drive shaft 30A. Thus, a contact position of the contacted face 9C with respect to the cam face 31A changes. Depending on the contact position with respect to the cam face 31A, the contacted face 9C moves in the up-down direction, and the lever 9 swings around the pivotal shaft 9A. Thus, the bonding device 1 can minutely adjust the nozzle clearance by driving the adjustment motor 30 when the nozzle 10 is in the proximate position. The origin point sensor 33 is provided in the vicinity of the drive shaft 30A of the adjustment motor 30. The detection plate 32 is substantially disk shaped and is fixed to the top face of the cam rotation body 31. The detection plate 32 extends substantially horizontally below the origin point sensor 33, and is provided with a notch-shaped edge portion 32A (refer to FIG. 2). The origin point sensor 33 detects an origin point of the adjustment motor 30 by detecting the position of the edge portion 32A.

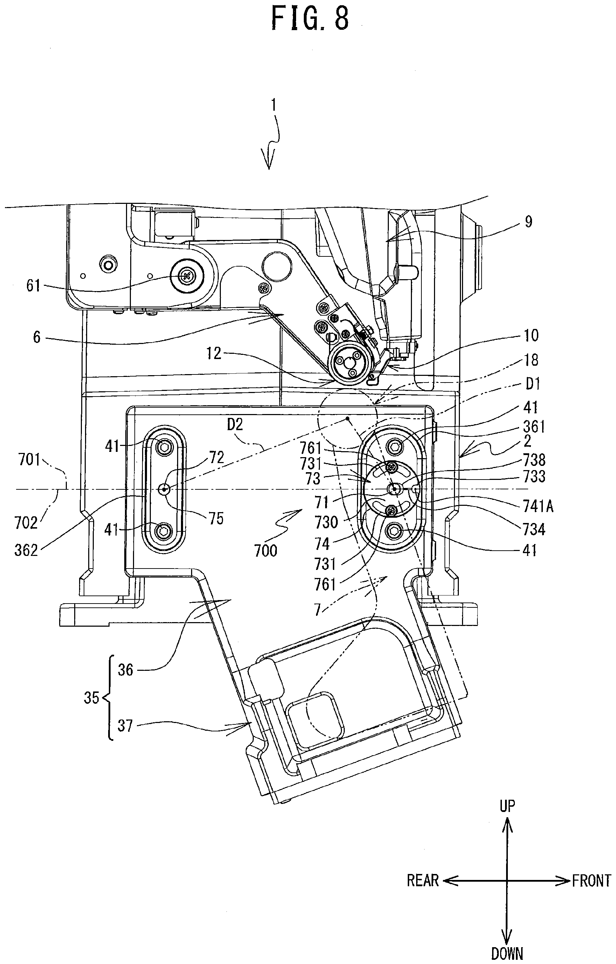

Illustrations of the lower feed arm 7 and the like are omitted in FIG. 6. The adjustment mechanism 700 is provided with a first shaft portion 71, a second shaft portion 72, a second hole portion 75, a retention hole portion 74, a rotating member 73, and a fixing portion 76. The first shaft portion 71 has a round rod shape, and protrudes to the left from a substantially central portion, in the up-down direction, of the attachment face 2A and from the vicinity of the front end portion of the attachment face 2A. The first shaft portion 71 extends perpendicularly with respect to the attachment face 2A. The second shaft portion 72 has a round rod shape, and protrudes to the left from a substantially central portion, in the up-down direction, of the attachment face 2A and from the vicinity of the rear end portion of the attachment face 2A. The second shaft portion 72 extends perpendicularly with respect to the attachment face 2A. The first shaft portion 71 and the second shaft portion 72 are parallel to each other, and have substantially the same length as each other in the left-right direction. A distance D1 between the axial center of the first shaft portion 71 and the center of rotation of the lower roller 18 is smaller than a distance D2 between the axial center of the second shaft portion 72 and the center of rotation of the lower roller 18 (refer to FIG. 8). When the bonding device 1 is placed on the top face of the work bench 200, a distance from the top face of the work bench 200 to the axial center of the first shaft portion 71 and a distance from the top face of the work bench 200 to the axial center of the second shaft portion 72 are substantially the same as each other. A first virtual line 701 (refer to FIG. 8) that passes through the axial center of the first shaft portion 71 and the axial center of the second shaft portion 72 is substantially parallel to the horizontal plane.

The second hole portion 75 is provided between the pair of rear hole portions 362A. The second hole portion 75 is circular in a side view, and penetrates in the left-right direction from the bottom face of the rear recessed portion 362 through to the right face of the attachment portion 36. The length of the second hole portion 75 in the left-right direction is substantially the same as the length of the second shaft portion 72 in the left-right direction. The diameter of the second hole portion 75 is slightly larger than the diameter of the second shaft portion 72. A center line of the second hole portion 75 extends perpendicularly with respect to the attachment face 2A and is aligned with the axial center of the second shaft portion 72. The second shaft portion 72 is inserted into the second hole portion 75. As a result, the lower roller base 35 can swing around the second shaft portion 72.

The retention hole portion 74 rotatably holds the rotating member 73. The retention hole portion 74 includes a retention recessed portion 741 and a retention through hole portion 742. The retention recessed portion 741 is circular in a side view, and is recessed to the right from the bottom face of the front recessed portion 361. The retention recessed portion 741 is provided between the pair of front hole portions 361A. The retention recessed portion 741 is provided with a marker 741A (refer to FIG. 8) in the vicinity of the front end portion of the retention recessed portion 741. The marker 741A is a recessed portion provided in the bottom face of the retention recessed portion 741. The retention through hole portion 742 is circular in a side view, and penetrates in the left-right direction from the bottom face of the retention recessed portion 741 to the right face of the attachment portion 36. The retention recessed portion 741 and the retention through hole portion 742 are positioned so as to be coaxial with each other. Specifically, center lines of the retention recessed portion 741 and the retention through hole portion 742 are a center line of the retention hole portion 74. The center line of the retention hole portion 74 extends perpendicularly with respect to the attachment face 2A and is eccentric with respect to the axial center of the first shaft portion 71.

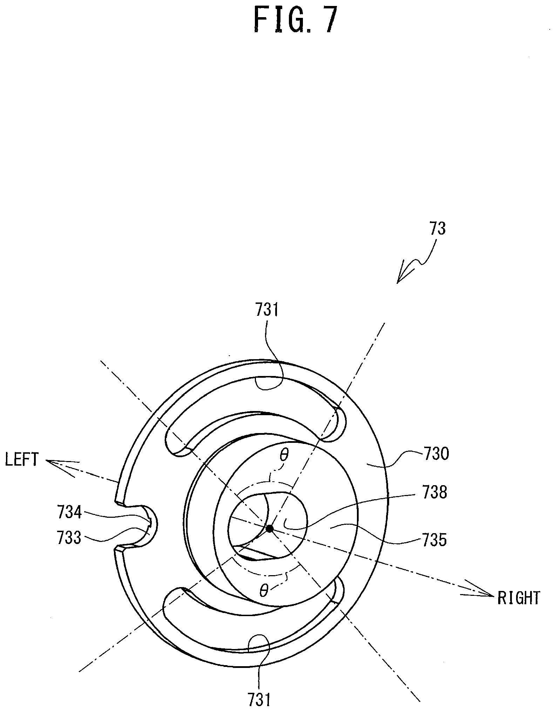

As shown in FIG. 7, the rotating member 73 is provided with a disk portion 730, a protruding portion 735, and a first hole portion 738. The disk portion 730 is circular in a side view and has a predetermined width in the left-right direction. The diameter of the disk portion 730 is slightly smaller than the diameter of the retention recessed portion 741. The length of the disk portion 730 in the left-right direction is substantially the same as the length of the retention recessed portion 741 in the left-right direction. The disk portion 730 is provided with a pair of hole portions 731, a cutout portion 733, and a groove portion 734. Each of the pair of hole portions 731 is arc-shaped and penetrates the disk portion 730 in the left-right direction, slightly to the inside of an outer peripheral edge of the disk portion 730. The pair of hole portions 731 are mutually symmetrical with respect to a second virtual line 702 (refer to FIG. 8) that passes through the axial center of the first shaft portion 71 and the center of the disk portion 730. Each of the hole portions 731 has a predetermined angle θ from one circle center of the semicircular hole to the other circle center of the semicircular hole, in relation to the center of the disk portion 730. In the present embodiment, the angle θ of the hole portion 731 is approximately 90 degrees. The cutout portion 733 is formed by being cut out in a substantial U shape toward the center of the disk portion 730, from an end portion in the extension direction of the second virtual line 702 on the outer peripheral edge of the disk portion 730. The groove portion 734 is formed along the second virtual line 702 on the left face of the disk portion 730, between the center-side edge portion of the cutout portion 733 and the first hole portion 738.

The protruding portion 735 is provided on the right face of the disk portion 730, between the pair of hole portions 731. The protruding portion 735 is circular in a side view and has a predetermined width in the left-right direction. The width of the protruding portion 735 in the left-right direction is larger than the width of the disk portion 730 in the left-right direction. The diameter of the protruding portion 735 is slightly smaller than the diameter of the retention through hole portion 742. The length of the protruding portion 735 in the left-right direction is substantially the same as the length in the left-right direction of the retention through hole portion 742. The protruding portion 735 and the disk portion 730 are positioned coaxially with each other. Specifically, the center lines of the protruding portion 735 and the disk portion 730 are the center line of the rotating member 73. The center line of the rotating member 73 extends perpendicularly with respect to the attachment face 2A.

The first hole portion 738 penetrates the disk portion 730 and the protruding portion 735 in the left-right direction. The first hole portion 738 has a substantially elliptical shape whose major axis is parallel to the second virtual line 702. The first hole portion 738 includes the center line of the rotating member 73. In a side view, the first hole portion 738 is symmetrical with respect to the second virtual line 702. The length of the first hole portion 738 in the left-right direction is substantially the same as the length of the first shaft portion 71 in the left-right direction. The length of the first hole portion 738 in the minor axis direction is slightly larger than the diameter of the first shaft portion 71. The first shaft portion 71 is inserted into the first hole portion 738. The rotating member 73 can thus rotate in a state in which the first shaft portion 71 is inserted into the first hole portion 738.

The disk portion 730 and the protruding portion 735 are inserted, respectively, into the retention recessed portion 741 and the retention through hole portion 742. In this case, the center line of the retention hole portion 74 and the center line of the rotating member 73 are aligned with each other. As a result, the retention hole portion 74 can rotatably hold the rotating member 73 with the center line of the retention hole portion 74 as the rotation axis of the rotating member 73. The center of the retention hole portion 74 and the axial center of the first shaft portion 71 are displaced in relation to each other in the front-rear direction. As a result, the rotation axis of the rotating member 73 rotatably held by the retention hole portion 74 is eccentric with respect to the axial center of first shaft portion 71.

The fixing portion 76 fixes the rotating member 73 to the lower roller base 35. The fixing portion 76 is provided with a pair of screw holes 763 and a pair of screws 761. The pair of screw holes 763 are provided, respectively, in an upper portion and a lower portion of the bottom face of the retention recessed portion 741. The pair of screws 761 are inserted into the pair of hole portions 731 from the left, and are screwed into the screw holes 763. As a result, the fixing portion 76 can fix the rotating member 73 to the lower roller base 35.

Operational modes of the adjustment mechanism 700 will be explained with reference to FIG. 8 to FIG. 10. The adjustment mechanism 700 can adjust an attachment position in the up-down direction of the lower roller base 35 with respect to the attachment face 2A. Specifically, when the rotating member 73 rotates with respect to the retention hole portion 74, the lower roller base 35 swings around the second shaft portion 72. A rotation range of the rotating member 73 includes a reference state. The reference state is a state of the rotating member 73 when the second virtual line 702 is substantially parallel to the horizontal plane (refer to FIG. 8). In the present embodiment, when the rotating member 73 is in the reference state, the second virtual line 702 is aligned with the first virtual line 701 (refer to FIG. 8), as seen from the left side. In this case, the rotation axis of the rotating member 73 is located to the rear with respect to the axial center of the first shaft portion 71.

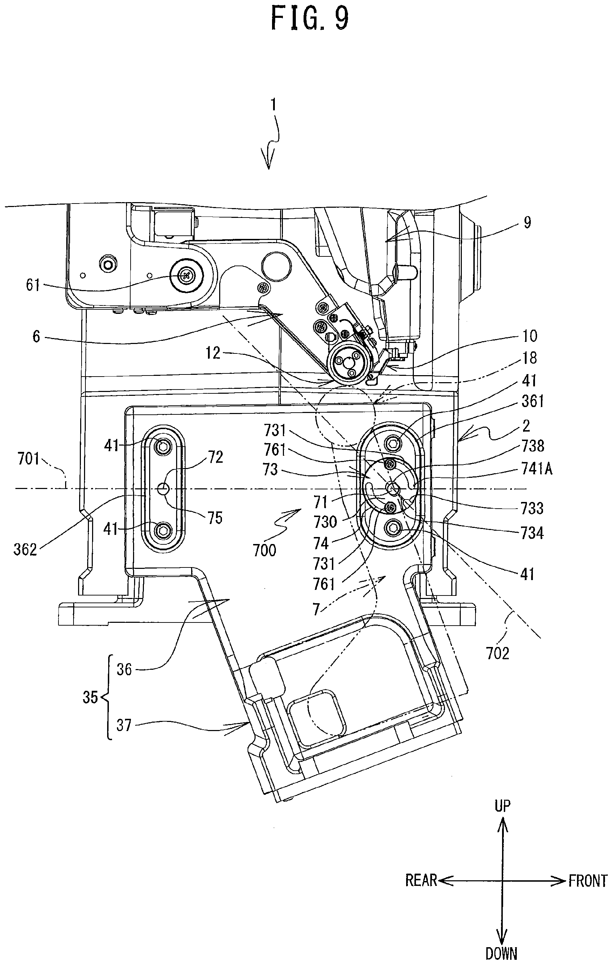

As shown in FIG. 9, when, from the reference state, the rotating member 73 rotates clockwise with respect to the retention hole portion 74 as seen from the left side, the second virtual line 702 tilts such that the front side of the second virtual line 702 is below the first virtual line 701 and the rear side of the second virtual line 702 is above the first virtual line 701. In this case, the rotation axis of the rotating member 73 is located upward and to the rear with respect to the axial center of the first shaft portion 71. As a result, the lower roller base 35 swings counterclockwise, as seen from the left side, around the second shaft portion 72. Thus, the lower roller 18 moves upward, and comes close to the upper roller 12. The rotating member 73 can rotate until the pair of screws 761 come into contact with the end portions of the pair of hole portions 731 on the downstream side in the counterclockwise direction. In the present embodiment, the angle θ is approximately 90 degrees, and thus the rotation angle over which the rotating member 73 can rotate, from the reference state, in the clockwise direction with respect to the retention hole portion 74 is approximately 45 degrees.

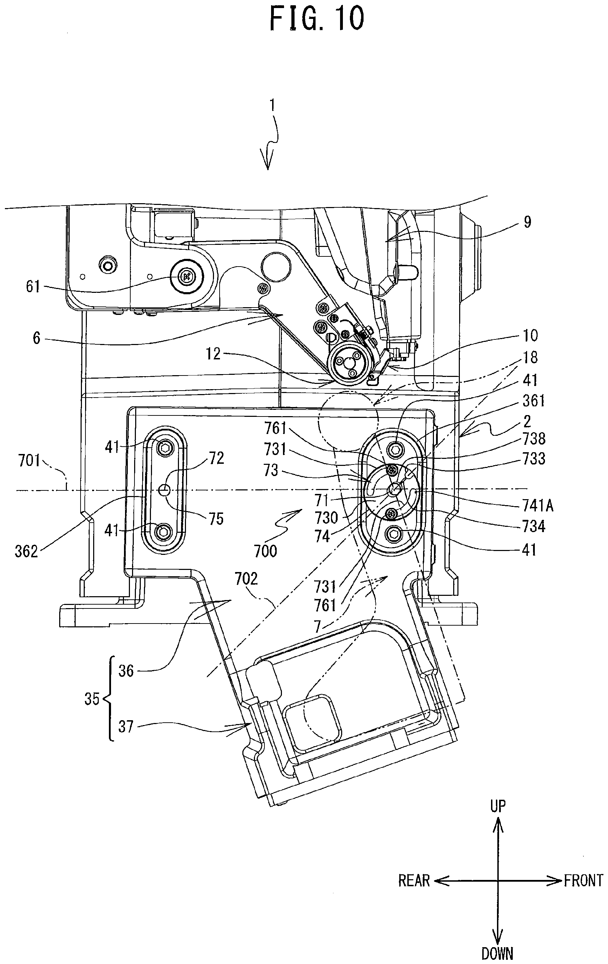

As shown in FIG. 10, when, from the reference state, the rotating member 73 rotates counterclockwise with respect to the retention hole portion 74 as seen from the left side, the second virtual line 702 tilts such that the front side of the second virtual line 702 is above the first virtual line 701 and the rear side of the second virtual line 702 is below the first virtual line 701. In this case, the rotation axis of the rotating member 73 is located downward and to the rear with respect to the axial center of the first shaft portion 71. As a result, the lower roller base 35 swings clockwise, as seen from the left side, around the second shaft portion 72. Thus, the lower roller 18 moves downward, and is separated from the upper roller 12. The rotating member 73 can rotate until the pair of screws 761 come into contact with the end portions of the pair of hole portions 731 on the downstream side in the clockwise direction. In the present embodiment, the angle θ is approximately 90 degrees, and thus the rotation angle over which the rotating member 73 can rotate, from the reference state, in the counterclockwise direction with respect to the retention hole portion 74 is approximately 45 degrees.

As shown in FIG. 8, when the rotating member 73 is in the reference state, the user can visually confirm the marker 741A via the cutout portion 733. When the rotating member 73 is in the reference state, the marker 741A is positioned in the direction in which the groove portion 734 extends. Thus, when the user visually confirms that the marker 741A is in the direction in which the groove portion 734 extends, the user can ascertain that the rotating member 73 is in the reference state. The bonding device 1 can easily indicate to the user that the rotating member 73 is in the reference state.

The tape bonding process by the bonding device 1 will be explained with reference to FIG. 4 and FIG. 5. The cloth C1 used in the tape bonding process is, for example, a cloth formed by joining the ends of two cloths together by thermal bonding. In the tape bonding process, the bonding device 1 can strengthen the joined section of the cloth C1 by adhering the tape C2 to the joined section of the cloth C1 using the adhesive. Before performing the tape bonding process, the user performs a first preparatory process and a second preparatory process.

In the first preparatory process, the user operates the command switch 11 and swings the lever 9, and moves the nozzle 10 to the retracted position (refer to FIG. 4). The user pulls out the leading end of the cloth C1, passes the cloth C1 under the nozzle 10 from the front side of the bonding device 1, and pulls it as far as the pressure bonding point between the upper roller 12 and the lower roller 18. The user pulls out the tape C2 toward the front from the tape supply source that is installed to the rear of the bonding device 1, and pulls it as far as the tape guide 90 fixed to the left side face 6A of the upper feed arm 6. The user passes the tape C2 through the tape guide 90. The tape C2 that has been passed through the tape guide 90 is pulled out along the outer circumferential face of the upper roller 12 as far as the pressure bonding point between the upper roller 12 and the lower roller 18. The user adjusts the position of the tape C2 in the width direction of the upper roller 12 such that the tape C2 overlays the joined section of the cloth C1. The user operates the command switch 11 and swings the lever 9, and moves the nozzle 10 to the proximate position (refer to FIG. 5).

In the second preparatory process, the user sets various parameters. The various parameters include the nozzle clearance, for example. The user operates the operation panel 300 and sets the desired nozzle clearance. The user sets the nozzle clearance in accordance with the thicknesses and materials of the cloth C1 and the tape C2, and the material of the adhesive etc. The bonding device 1 operates the adjustment motor 30 (refer to FIG. 3), and moves the nozzle 10 to the set nozzle clearance. The operation panel 300 displays the current setting of the nozzle clearance on the display screen 301. The nozzle clearance set on the operation panel 300 is a distance between the discharge outlets 65 and the outer circumferential face of the upper roller 12 that is in a reference position set in advance (hereinafter referred to as a predetermined position). When the position of the upper roller 12 is displaced from the predetermined position, a difference arises between the nozzle clearance set on the operation panel 300 (the nozzle clearance displayed on the display screen 301) and the actual nozzle clearance. For example, the predetermined position of the present embodiment is a position of the upper roller 12 when the rotating member 73 is in the reference state, and when the cloth C1 having a thickness of 1 mm and the tape C2 are clamped between the upper roller 12 and the lower roller 18. When the upper roller 12 is in the predetermined position, if the nozzle clearance is set to 0.5 mm on the operation panel 300, the actual nozzle clearance is also 0.5 mm.

Operations of the bonding device 1 in the tape bonding process will be explained with reference to FIG. 3 and FIG. 5. In a state in which the second preparatory process is complete, a state is obtained in which the tape C2 overlays the joined section of the cloth C1 at the pressure bonding point between the upper roller 12 and the lower roller 18. The bonding device 1 operates the upper feed motor 22 and the lower feed motor 38 in synchronization. The upper roller drive mechanism 15 rotates the upper roller 12 clockwise, as seen from the left side. The lower roller drive mechanism rotates the lower roller 18 counterclockwise, as seen from the left side. The cloth C1 moves along the feed path R1. The tape C2 moves along the feed path R2. The bonding device 1 operates the pump motor 20 while operating the upper feed motor 22 and the lower feed motor 38. When the pump motor 20 operates, the gear pump 13 draws an appropriate amount of the adhesive out of the cartridge that is mounted in the cartridge mounting portion 14, and supplies the adhesive to the supply channel inside the lever 9. The adhesive flows through the supply channel and is discharged from the discharge outlets 65. The discharge outlets 65 face the outer circumferential face of the upper roller 12 at a position further to the upstream side, on the feed path R2 of the tape C2, than the pressure bonding point between the upper roller 12 and the lower roller 18. As a result, the bonding device 1 is able to apply the adhesive to the bonding face of the tape C2 that is being fed along the outer circumferential face of the upper roller 12, and is able to adhere the bonding face onto the joined section of the cloth C1 and perform the pressure bonding at the pressure bonding point. In other words, the bonding device 1 can apply the adhesive to the bonding face of the tape C2 without applying the adhesive to the joined section of the cloth C1. Therefore, the adhesive does not ooze out when adhering the tape C2 to the cloth C1, and the bonding device 1 can suppress bonding defects of the tape C2 with respect to the joined section. The bonding device 1 adhering the bonding face of the tape C2, to which the adhesive has been applied, onto the joined section of the cloth C1, then feeds the cloth C1 and the tape C2 toward the rear.

An operation of the user when the cloth C1 is replaced with the cloth C1 having a different thickness will be explained. At the pressure bonding point, the upper feed arm 6 swings in the up-down direction around the shaft portion 61 in accordance with the thickness of the cloth C1, and the distance between the upper roller 12 and the lower roller 18 changes. When the cloth C1 is thick, the distance between the upper roller 12 and the lower roller 18 becomes larger, and when the cloth C1 is thin, the distance between the upper roller 12 and the lower roller 18 becomes smaller. For example, when the cloth C1 having a thickness of 1 mm is replaced with the cloth C1 having a thickness of 2 mm, since the lower roller 18 is fixed to the attachment face 2A via the lower roller base 35, the upper roller 12 swings upward around the shaft portion 61. As a result, the position of the upper roller 12 is displaced upward by 1 mm, and is displaced from the predetermined position. In this case, the actual nozzle clearance changes from 0.5 mm to 0.8 mm, for example, and a difference arises between the nozzle clearance set on the operation panel 300 (0.5 mm) and the actual nozzle clearance (0.8 mm). In this case, since the operation panel 300 displays the nozzle clearance as 0.5 mm on the display screen 301, there is a possibility that the user mistakenly identifies the actual nozzle clearance as 0.5 mm. Since the difference arises between the actual nozzle clearance and the nozzle clearance set on the operation panel 300, it is possible that the bonding device 1 cannot apply the adhesive to the tape C2 in a stable manner, resulting in a bonding defect.

The difference between the nozzle clearance set on the operation panel 300 and the actual nozzle clearance can be suppressed by adjusting the attachment position in the up-down direction of the lower roller base 35 with respect to the attachment face 2A. Due to the lower feed arm 7, the lower feed motor 38, and the like, the weight of the lower roller base 35 is heavy. However, the user can easily minutely adjust the attachment position in the up-down direction of the lower roller base 35 by performing a lower roller base adjustment process described below.

The lower roller base adjustment process will be explained with reference to FIG. 8 and FIG. 10. When the cloth C1 is replaced with the cloth C1 having the different thickness or the like, the user performs the lower roller base adjustment process before performing the first preparatory process. In the lower roller base adjustment process, the user adjusts the attachment position in the up-down direction of the lower roller base 35 with respect to the attachment face 2A in accordance with the thickness etc. of the cloth C1, and adjusts the distance between the upper roller 12 and the lower roller 18 such that the position of the upper roller 12 is not displaced from the predetermined position. When, for example, the user replaces the thin cloth C1 with the thick cloth C1 (changes from the 1 mm cloth C1 to the 2 mm cloth C1, for example), the user uses the adjustment mechanism 700 to move the position of the lower roller 18 downward by 1 mm. Hereinafter, the lower roller base adjustment process will be explained taking this case as a specific example.

The user loosens the four screws 41 in the screw holes 41A, and loosens the pair of screws 761 in the pair of screw holes 763. In this case, a state is obtained in which the attachment portion 36 can move slightly with respect to the attachment face 2A, and the rotating member 73 can rotate with respect to the retention hole portion 74. In this state, the user inserts a tool, such as a flathead screwdriver or the like, into the groove portion 734 and rotates the rotating member 73 counterclockwise as seen from the left side. By rotating the rotating member 73 while visually confirming the position of the groove portion 734, the user can rotate the rotating member 73 while ascertaining a rotation amount with respect to the position of the groove portion 734 when the rotating member 73 is in the reference state. As a result, the user can ascertain an amount of displacement of the position of the lower roller 18 in the up-down direction by ascertaining the rotation amount of the rotating member 73. When the user has rotated the rotating member 73 by the desired rotation amount (namely, when the position of the lower roller 18 in the up-down direction has been displaced downward by 1 mm), the user tightens the pair of screws 761 in the screw holes 763, and fixes the rotating member 73 to the lower roller base 35. The user tightens the four screws 41 in the screw holes 41A and fixes the lower roller base 35 to the attachment face 2A.

As described above, because the bonding device 1 can move the position of the lower roller 18 downward by 1 mm when the thin cloth C1 is replaced by the thick cloth C1 (from the 1 mm cloth C1 to the 2 mm cloth C1), it is possible to inhibit the position of the upper roller 12 from being displaced from the predetermined position. As a result, the bonding device 1 can suppress the difference between the nozzle clearance set on the operation panel 300 and the actual nozzle clearance. The attachment position of the heavy lower roller base 35 with respect to the attachment face 2A can be minutely adjusted in the up-down direction, simply by the user rotating the rotating member 73. Thus, the bonding device 1 can easily adjust the position of the lower roller 18 in the up-down direction with respect to the upper roller 12.

When the thick cloth C1 is replaced with the thin cloth C1 (from the 2 mm cloth C1 to the 1 mm cloth C1, for example), the user loosens the four screws 41 and the pair of screws 761, rotates the rotating member 73 clockwise as seen from the left side, and makes the distance between the upper roller 12 and the lower roller 18 smaller. In this case, the procedure of the lower roller base adjustment process is the same as that described above, apart from the rotation direction of the rotating member 73, and an explanation is thus omitted here.

As described above, the rotation axis of the rotating member 73 is eccentric with respect to the first shaft portion 71, and thus, due to the rotation of the rotating member 73, the rotating member 73 moves up and down with respect to the first shaft portion 71, on the inside of the first hole portion 738. As a result, the adjustment mechanism 700 can convert a force obtained by the rotation of the rotating member 73 to a force that moves the lower roller base 35 up and down with respect to the first shaft portion 71. When the rotating member 73 moves up and down with respect to the first shaft portion 71, the attachment position of the lower roller base 35 in the up-down direction with respect to the attachment face 2A is displaced. In this case, the position of the lower roller 18 with respect to the upper roller 12 in the up-down direction is also displaced. As a result, the user can adjust the distance between the upper roller 12 and the lower roller 18 without displacing the position of the upper roller 12 by rotating the rotating member 73. It is possible to suppress changes in the distance between the tape C2 and the discharge outlets 65 when the bonding device 1 applies the adhesive to the tape C2.

The retention hole portion 74 that penetrates the attachment portion 36 in the left-right direction rotatably holds the rotating member 73. Thus, in the bonding device 1, there is no need to newly provide a member to hold the rotating member 73. The number of parts of the bonding device 1 can be reduced and the bonding device 1 can be made more compact.

When the rotating member 73 rotates, the lower roller base 35 swings around the second shaft portion 72. As a result, the user can adjust the position of the lower roller 18 in the up-down direction simply by rotating the rotating member 73. The bonding device 1 can easily adjust the position of the lower roller 18 in the up-down direction.

The distance D1 between the first shaft portion 71 that is inserted into the first hole portion 738 and the center of rotation of the lower roller 18 is smaller than the distance D2 between the second shaft portion 72, which is a center of oscillation of the lower roller base 35, and the center of rotation of the lower roller 18. The movement amount of the lower roller 18 in the up-down direction when the lower roller base 35 swings around the second shaft portion 72 is proportional to the distance between the second shaft portion 72 and the lower roller 18. Therefore, in comparison to a case in which the distance between the first shaft portion 71 and the lower roller 18 is larger than the distance between the second shaft portion 72 and the lower roller 18, the bonding device 1 can significantly move the lower roller 18 up and down even when the rotation amount of the rotating member 73 is small. The bonding device 1 can increase an adjustment range of the position of the lower roller 18 in the up-down direction.

The first virtual line 701 that passes through the axial center of the first shaft portion 71 and the axial center of the second shaft portion 72 is substantially parallel to the horizontal plane. As a result, the bonding device 1 can make movement amounts of the lower roller 18 substantially equal to each other when the rotating member 73 is rotated by the same amount clockwise and counterclockwise, respectively.

The first hole portion 738 is a hole portion having a substantially elliptical shape extending in parallel to the second virtual line 702 that passes through the rotation axis of the rotating member 73 and the axial center of the first shaft portion 71. The rotation range of the rotating member 73 includes the reference state in which the second virtual line 702 is substantially parallel to the horizontal plane. As a result, the bonding device 1 can make movement amounts of the lower roller base 35 substantially equal to each other when the rotating member 73 in the reference state is rotated by the same amount clockwise and counterclockwise, respectively.

The adjustment mechanism 700 is provided with the fixing portion 76 that fixes the rotating member 73 to the lower roller base 35. Therefore, after the position of the lower roller 18 has been adjusted in the up-down direction using the rotating member 73, in the bonding device 1, the rotating member 73 can be fixed to the lower roller base 35 using the fixing portion 76. The bonding device 1 can inhibit the position of the lower roller 18 in the up-down direction from becoming displaced after the adjustment.

In the above description, the tape C2 is an example of a first sheet of the present invention. The cloth C1 is an example of a second sheet of the present invention. The attachment face 2A is an example of a fixing face of the present invention. The lower feed arm 7 is an example of a lower roller support portion of the present invention.

The present invention is not limited to the above-described embodiment and the following various modifications are possible, for example. The bonding device 1 of the above-described embodiment can bond a flexible sheet-like material, which is not limited to the cloth.

The user performs the lower roller base adjustment process before performing the first preparatory process, but the user may perform the lower roller base adjustment process after the first preparatory process, or after the second preparatory process. Each procedure of the processes is merely an example, and is not limited to the above-described embodiment.

The first shaft portion 71 protrudes to the left from the attachment face 2A, but the first shaft portion 71 may protrude to the right from the attachment portion 36. In this case, it is sufficient that the rotating member 73 and the retention hole portion 74 be provided on the attachment face 2A.

The second shaft portion 72 protrudes to the left from the attachment face 2A, but the second shaft portion 72 may protrude to the right from the attachment portion 36. In this case, it is sufficient that the second hole portion 75 be provided in the attachment face 2A.

The marker 741A is provided only in the vicinity of the front end portion of the retention recessed portion 741, but may be provided in a plurality, at predetermined intervals. In this case, the user can easily ascertain the rotation amount of the rotating member 73 by visually confirming one of the plurality of markers 741A via the cutout portion 733. The marker 741A need not necessarily be provided. In this case, the rotating member 73 need not necessarily be provided with the cutout portion 733.

The adjustment mechanism 700 is provided with the second shaft portion 72 and the second hole portion 75. However, the adjustment mechanism 700 may be provided with the first shaft portion 71, the rotating member 73, and the retention hole portion 74 in place of the second shaft portion 72 and the second hole portion 75. In other words, the adjustment mechanism 700 may be provided with a pair of the first shaft portions 71, a pair of the rotating members 73, and a pair of the retention hole portions 74. In this case, if one of the pair of rotating members 73 is rotated in either the clockwise or the counterclockwise direction, and the other of the rotating members 73 is rotated in the opposite direction, the lower roller base 35 can move in the up-down direction. In this case, the adjustment mechanism 700 can adjust the position of the lower roller 18 in the up-down direction with respect to the upper roller 12, without displacing the position of the lower roller 18 in the front-rear direction with respect to the upper roller 12.

The first hole portion 738 penetrates the rotating member 73 in the left-right direction and includes the center line of the rotating member 73. However, the first hole portion 738 need not necessarily include the center line of the rotating member 73. The first hole portion 738 has an elliptical shape extending in parallel to the second virtual line 702, but the first hole portion 738 may have a circular shape in a side view, or may have a curved shape in a side view.

In the above-described embodiment, the distance between the first shaft portion 71 and the center of rotation of the lower roller 18 is smaller than the distance between the second shaft portion 72 and the center of rotation of the lower roller 18. The distance between the first shaft portion 71 and the center of rotation of the lower roller 18 may be larger than the distance between the second shaft portion 72 and the center of rotation of the lower roller 18, or may be the same as the distance between the second shaft portion 72 and the center of rotation of the lower roller 18.

The first virtual line 701 that passes through the axial center of the first shaft portion 71 and the axial center of the second shaft portion 72 may be tilted with respect to the horizontal plane.

The fixing portion 76 may be provided with a pair of pins and a pair of holes into which the pins can be inserted, for example, and may fix the rotating member 73 to the lower roller base 35 by tightening locking screws in a state in which the pair of pins are inserted into the pair of holes.

## Claims

1. A bonding device (1) which is provided with a nozzle (10) that is adapted to discharge adhesive, which bonds a bonding surface of a first sheet (C2) to a second sheet (C1) via the adhesive discharged from the nozzle, and which feeds the first sheet and the second sheet, the bonding device comprising:
a base portion (2) being a base of the bonding device and having a fixing face (2A) parallel to the up-down direction;
an upper roller (12) adapted to come into contact with a face on the opposite side to the bonding face of the first sheet and adapted to feed the first sheet overlaid on a top face of the second sheet;
a lower roller (18) disposed facing the upper roller, adapted to come into contact with a bottom face of the second sheet, and adapted to clamp the first sheet and the second sheet between the lower roller and the upper roller;
a lower roller support portion (7) rotatably supporting the lower roller;
a lower roller base (35) holding the lower roller support portion; and
an adjustment mechanism (700) adapted to adjust an attachment position, in the up-down direction, of the lower roller base with respect to the fixing face of the base portion, and including a first shaft portion (71) extending in a perpendicular direction with respect to the fixing face, from one of the fixing face and the lower roller base, and a rotating member (73) provided on the other one of the fixing face and the lower roller base, having a first hole portion (738) into which is inserted the first shaft portion, extending in parallel to the perpendicular direction, and being capable of rotating around a rotation axis that is eccentric with respect to the first shaft portion.

2. The bonding device according to claim 1, wherein
the adjustment mechanism includes a retention hole portion (74) penetrating the lower roller base in parallel to the perpendicular direction and into which the rotating member is inserted,
the retention hole portion holds the rotating member such that the rotating member is able to rotate around the rotation axis, and
the first shaft portion extends in the perpendicular direction from the fixing face.

3. The bonding device according to claim 2, wherein
the adjustment mechanism includes
a second shaft portion (72) provided, on the fixing face, further to a downstream side in a feed direction of the first sheet and the second sheet than the first shaft portion, and extending in parallel to the perpendicular direction, and
a second hole portion (75) provided in the lower roller base and into which the second shaft portion is inserted, and
the lower roller base is able to swing around the second shaft portion inserted into the second hole portion.

4. The bonding device according to claim 3, wherein
a distance between the first shaft portion and a center of rotation of the lower roller is smaller than a distance between the second shaft portion and the center of rotation of the lower roller.

5. The bonding device according to claim 3 or 4, wherein
a first virtual line (701) passing through an axial center of the first shaft portion and an axial center of the second shaft portion is parallel to a horizontal plane.

6. The bonding device according to claim 5, wherein
the first hole portion is an elliptical hole portion extending in parallel to a second virtual line (702) passing through the rotation axis and the axial center of the first shaft portion, and
a rotation range of the rotating member includes a reference state in which the second virtual line is parallel to the horizontal plane.

7. The bonding device according to any one of claims 1 to 6, wherein
the adjustment mechanism includes a fixing portion (76) fixing the rotating member to the lower roller base.

## Patentansprüche

1. Verklebungsvorrichtung (1), die über eine Düse (10) verfügt, die geeignet ist, Klebstoff auszustoßen, der mithilfe des Klebstoffs, der von der Düse ausgestoßen wird, eine Klebefläche eines ersten Tuchs (C2) auf ein zweites Tuch (C1) klebt, und die das erste Tuch und das zweite Tuch zuführt, wobei die Verklebungsvorrichtung Folgendes umfasst:
einen Basisabschnitt (2), der eine Basis der Verklebungsvorrichtung ist und eine Befestigungsfläche (2A) aufweist, die parallel zu der Auf-/Ab-Richtung ist;
eine obere Walze (12), die geeignet ist, in Kontakt mit einer Fläche auf der gegenüberliegenden Seite zu der Verklebungsfläche des ersten Tuchs zu kommen, und geeignet ist, das erste Tuch überlagert auf einer Oberseite des zweiten Tuchs zuzuführen;
eine untere Walze (18), die der oberen Walze zugewandt angeordnet ist, die geeignet ist, in Kontakt mit einer Unterseite des zweiten Tuchs zu kommen, und geeignet ist, das erste Tuch und das zweite Tuch zwischen der unteren Walze und der oberen Walze einzuklemmen;
einen unteren Walzen-Stützabschnitt (7), der die untere Walze drehbar stützt;
eine untere Walzen-Basis (35), die den unteren Walzen-Stützabschnitt hält; und
einen Einstellmechanismus (700), der geeignet ist, eine Befestigungsposition, in der Auf-/Ab-Richtung, der unteren Walzen-Basis in Bezug auf die Befestigungsfläche des Basisabschnitts einzustellen, und der einen ersten Wellenabschnitt (71), der sich in einer senkrechten Richtung in Bezug auf die Befestigungsfläche von einer von der Befestigungsfläche und der unteren Walzen-Basis erstreckt, und ein Drehelement (73), das an der jeweils anderen von der Befestigungsfläche und der unteren Walzen-Basis bereitgestellt ist, beinhaltet, das einen ersten Öffnungsabschnitt (738) aufweist, in den der erste Wellenabschnitt eingeführt ist, der sich parallel zu der senkrechten Richtung erstreckt, und das in der Lage ist, sich um eine Drehachse, die exzentrisch in Bezug auf den ersten Wellenabschnitt ist, zu drehen.

2. Verklebungsvorrichtung nach Anspruch 1, wobei
der Einstellmechanismus einen Retentionslochabschnitt (74) beinhaltet, der die untere Walzen-Basis parallel zu der senkrechten Richtung durchdringt und in den das Drehelement eingeführt ist,
der Retentionslochabschnitt das Drehelement hält, sodass sich das Drehelement um die Drehachse drehen kann, und
sich der erste Wellenabschnitt in der senkrechten Richtung von der Befestigungsfläche erstreckt.

3. Verklebungsvorrichtung nach Anspruch 2, wobei
der Einstellmechanismus Folgendes beinhaltet:
einen zweiten Wellenabschnitt (72), der an der Befestigungsfläche, weiter zu einer stromabwärtigen Seite hin als der erste Wellenabschnitt, in einer Förderrichtung des ersten Tuchs und des zweiten Tuchs bereitgestellt ist und sich parallel zu der senkrechten Richtung erstreckt und
einen zweiten Lochabschnitt (75), der in der unteren Walzen-Basis bereitgestellt ist und in den der zweite Wellenabschnitt eingeführt ist, und
wobei die untere Walzen-Basis um den zweiten Wellenabschnitt, der in den zweiten Lochabschnitt eingeführt ist, herum schwingen kann.

4. Verklebungsvorrichtung nach Anspruch 3, wobei
ein Abstand zwischen dem ersten Wellenabschnitt und einem Drehmittelpunkt der unteren Walze kleiner ist als ein Abstand zwischen dem zweiten Wellenabschnitt und dem Drehmittelpunkt der unteren Walze.

5. Verklebungsvorrichtung nach Anspruch 3 oder 4, wobei
eine erste virtuelle Linie (701) durch eine axiale Mitte des ersten Wellenabschnitts verläuft und eine axiale Mitte des zweiten Wellenabschnitts parallel zu einer horizontalen Ebene ist.

6. Verklebungsvorrichtung nach Anspruch 5, wobei
der erste Lochabschnitt ein elliptischer Lochabschnitt ist, der sich parallel zu einer zweiten virtuellen Linie (702) erstreckt, die durch die Drehachse und die axiale Mitte des ersten Wellenabschnitts verläuft und
ein Drehbereich des Drehelements einen Referenzzustand beinhaltet, in dem die zweite virtuelle Linie parallel zu der horizontalen Ebene ist.

7. Verklebungsvorrichtung nach einem der Ansprüche 1 bis 6, wobei
der Einstellmechanismus einen Befestigungsabschnitt (76) beinhaltet, der das Drehelement an der unteren Walzen-Basis befestigt.

## Revendications

1. Dispositif de collage (1) qui est muni d'une buse (10) qui est adaptée pour décharger un adhésif, qui colle une surface de collage d'une première feuille (C2) à une deuxième feuille (C1) par le biais de l'adhésif déchargé de la buse, et qui fournit le première feuille et le deuxième feuille, le dispositif de collage comprenant :
une partie de base (2) qui est une base du dispositif de collage et ayant une face de fixation (2A) parallèle au sens haut-bas ;
un rouleau supérieur (12) adapté pour venir en contact avec une face sur le côté opposé à la face de collage de la première feuille et adapté pour fournir la première feuille superposée sur une face supérieure de la deuxième feuille ;
un rouleau inférieur (18) disposé face au rouleau supérieur, adapté pour venir en contact avec une face inférieure de la deuxième feuille, et adapté pour serrer la première feuille et la deuxième feuille entre le rouleau inférieur et le rouleau supérieur ;
une partie de support de rouleau inférieur (7) supportant en rotation le rouleau inférieur ;
une base de rouleau inférieur (35) tenant la partie de support de rouleau inférieur ; et
un mécanisme d'ajustement (700) adapté pour ajuster une position d'attache, dans le sens haut-bas, de la base de rouleau inférieur vis-à-vis de la face de fixation de la partie de base, et comprenant une partie d'arbre creuse (71) s'étendant dans une direction perpendiculaire vis-à-vis de la face de fixation, à partir de l'une de la face de fixation et de la base de rouleau inférieur, et un élément en rotation (73) prévu sur l'autre de la face de fixation et de la base de rouleau inférieur, ayant une première partie de trou (738) dans laquelle est insérée la première partie d'arbre, s'étendant parallèlement à la direction perpendiculaire, et étant capable de tourner autour d'un axe de rotation qui est excentrique vis-à-vis de la première partie d'arbre.

2. Dispositif de collage selon la revendication 1, dans lequel
le mécanisme d'ajustement comprend une partie de trou de retenue (74) pénétrant la base de rouleau inférieure parallèlement à la direction perpendiculaire et dans lequel est inséré l'élément en rotation,
la partie de trou de retenue tenant l'élément en rotation de sorte que l'élément en rotation soit capable de tourner autour de l'axe de rotation, et
la première partie d'arbre s'étend dans la direction perpendiculaire depuis la face de fixation.

3. Dispositif de collage selon la revendication 2, dans lequel
le mécanisme d'ajustement comprend
une deuxième partie d'arbre (72) prévue, sur la face de fixation, plus loin sur un côté aval dans une direction de fourniture de la première feuille et de la deuxième feuille que la première partie d'arbre, et s'étendant parallèlement à la direction perpendiculaire, et
une deuxième partie de trou (75) prévue dans la base de rouleau inférieur et dans laquelle est insérée la deuxième partie d'arbre, et
la base de rouleau inférieur est capable de basculer autour de la deuxième partie d'arbre insérée dans la deuxième partie de trou.

4. Dispositif de collage selon la revendication 3, dans lequel
une distance entre la première partie d'arbre et un centre de rotation du rouleau inférieur est plus petite qu'une distance entre la deuxième partie d'arbre et le centre de rotation du rouleau inférieur.

5. Dispositif de collage selon la revendication 3 ou 4, dans lequel
une première ligne virtuelle (701) passant par un centre axial de la première partie d'arbre et un centre axial de la deuxième partie d'arbre est parallèle à un plan horizontal.

6. Dispositif de collage selon la revendication 5, dans lequel
la première partie de trou est une partie de trou elliptique s'étendant parallèlement à une deuxième ligne virtuelle (702) passant par l'axe de rotation et le centre axial de la première partie d'arbre, et
une plage de rotation de l'élément en rotation comprend un état de référence dans lequel la deuxième ligne virtuelle est parallèle au plan horizontal.

7. Dispositif de collage selon l'une quelconque des revendications 1 à 6, dans lequel
le mécanisme d'ajustement comprend une partie de fixation (76) fixant l'élément en rotation à la base de rouleau inférieur.
